# EUROPEAN PATENT APPLICATION

(11) **EP 0 546 777 A2**
(43) Date of publication of application: **16.06.1993**
(21) Application number: 92311112.4
(22) Date of filing: 07.12.1992
(51) Int. Cl.: G11B 15/675, G11B 15/17

(54) **Tape recorder**

(30) Priority: 10.12.1991 JP 325604/91
(71) Applicant: MATSUSHITA ELECTRIC INDUSTRIAL CO., LTD., Kadoma-shi, Osaka-fu 571 (JP)
(72) Inventor: Kage, Shingo, Kobe-shi, Hyogo 651-21 (JP); Yamano, Yoshikazu, Osaka-shi, Osaka 547 (JP); Toyama, Yasunari, Osaka-shi, Osaka 546 (JP)
(74) Representative: Crawford, Andrew Birkby

(57) **Abstract**

The present invention is a tape recorder in which DCC has a hole at upper surface of the DCC, and in which the DCC is moved in parallel direction of insertion of the DCC and then moved downwardly, having a holder for holding the DCC, a first supporting means for supporting the holder, a projection disposed on the first supporting means, transfer means for transferring the DCC in parallel direction, a second supporting means, rotatably mounted on the transfer means, for supporting the lower surface of the DCC, urging means for urging the second supporting means toward the lower surface of the DCC. The projection mates with the hole in the upper surface of the DCC. The second supporting means has an extending part and the first supporting means has a contact surface which contacts with the extending part of the second supporting means when the parallel movement of the DCC is accomplished. In operation, when the DCC moves in the parallel direction, the DCC is caught between the first supporting means and the second supporting means. After that, when the DCC moves perpendicularly, the second supporting means does not obstruct this perpendicular movement of the DCC.

## Description

The invention relates generally to a tape recorder used at home or designed especially for car use. In particular, this invention relates to a tape recorder having a tape cassette loading mechanism.

Presently, digital audio related equipment is becoming popular and now, two methods of high quality digital-recording and digital-playback tape recorder are suggested due to a development of technology. One method is R-DAT using a rotary head. Another method is S-DAT using stationary head. In particular, since S-DAT uses stationary head, the structure of both head and tape cassette of S-DAT is similar to that of conventional analog method tape recorders. Because of this similarity, commercialization of tape recorders which can record and playback both digital and analog signals is desired.

Following is a presently proposed tape recorder which can record and playback both digital and analog signals. A conventional analog method compact cassette (so called ACC) has a thick part having a front opening for inserting magnetic head and pinch roller. A digital method compact cassette (so called DCC) has a shutter covering a front opening for inserting magnetic head and pinch roller. The shutter will cover the opening when not in use, and will slide toward the same direction as running direction of the magnetic tape or reverse direction to insert the magnetic head and pinch roller during use. The presently proposed tape recorder is used for both DCC and ACC.

Since differently shaped tape cassettes (that is ACC and DCC) are recorded and played back by a single tape recorder, a loading structure suitable for supporting, instituting and removing the two differently shaped tape cassettes is needed, especially for a tape recorder for car use having a tape cassette loading structure.

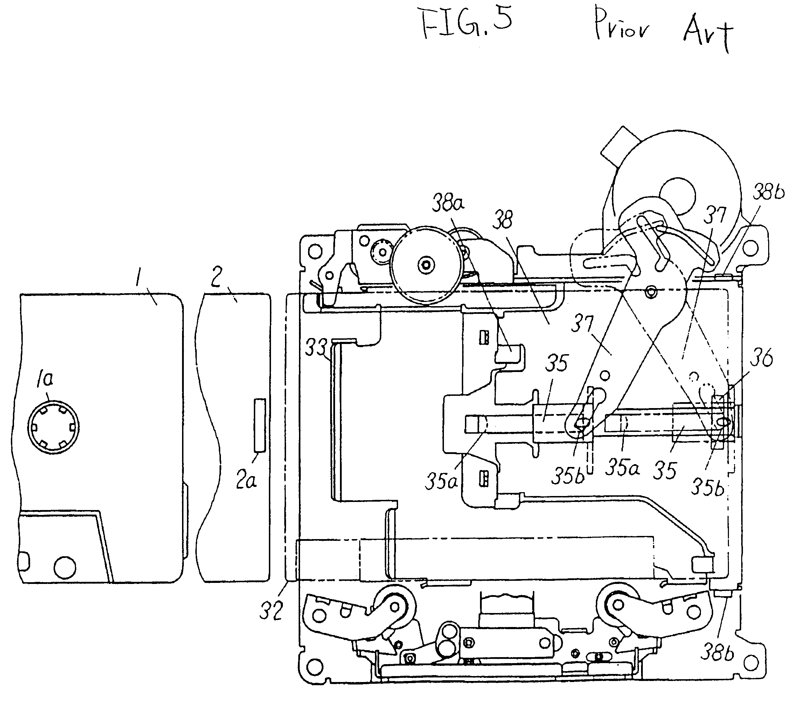

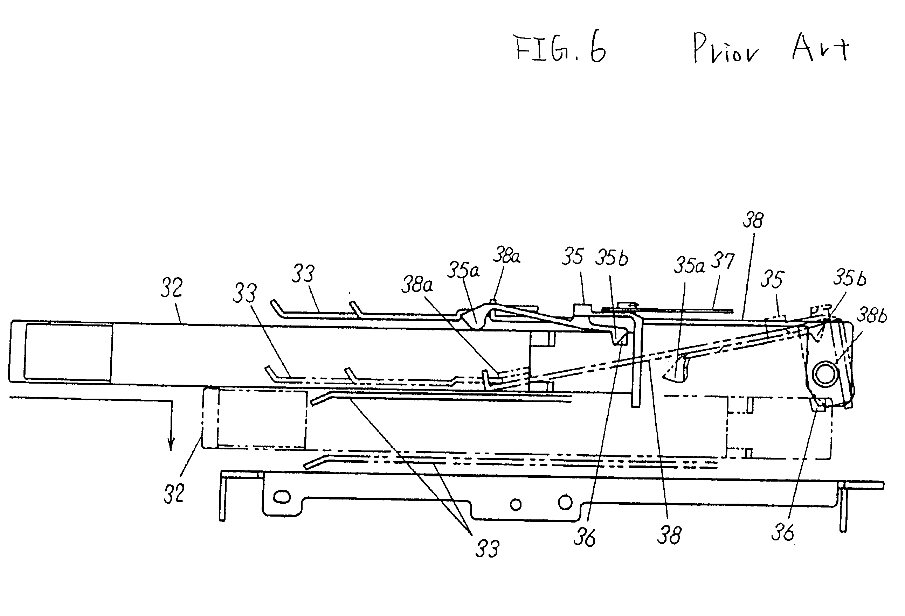

By the way, a loading structure of this type suitable for both ACC and DCC has already been proposed by the inventor of this application. The following is an explanation of this loading structure shown in FIG. 5 and FIG. 6. A numeral 1 represents ACC. A numeral 2 represents DCC. A numeral 33 represents a holder for holding both ACC 1 and DCC 2. ACC 1 has a hole 1a for inserting a reel axis. A numeral 35 represents an engaging member for supporting both ACC 1 and DCC 2. The engaging member 35 has a projection 35a at one end of the engaging member 35. The projection 35a mates with the hole 1a of ACC 1. A numeral 2a represents a grip slot which mates with a projection 35b disposed on the other end of the engaging member 35. A numeral 37 represents a transfer means for transferring both ACC 1 and DCC 2 in the direction of insertion of a tape cassette. A numeral 38 represents a supporting member. One end of the supporting member 38 is rotatably supported at rotation part 38b, and another end of the supporting member 38 has a supporting part 38a. The supporting part 38a supports the holder 33 so that the holder 33 moves in the direction perpendicular to the upper surface of both ACC 1 and DCC 2.

Both ACC 1 and DCC 2 are transferred from a first position where both ACC 1 and DCC 2 are supported by the projection 35a or projection 35b of the engaging member 35 in the rightward direction by the transfer means 37. After moving in a rightward direction, the supporting member 38 rotates counter-clock-wise around the rotation part 38b, whereby the holder 33 is transferred downward to a second position where recording and playback is done. This transfer is shown by the arrow direction in FIG. 6.

In the above-described tape recorder, while both ACC 1 and DCC 2 are supported within the transfer means 37 by mating the hole 1a with the projection 35a in the case of ACC 1 or by mating the grip slot 2a with the projection 35b in the case of DCC 2, a depth of the grip slot 2a of the DCC 2 is shallower than that of the hole 1a. Moreover, in order for both ACC 1 and DCC 2 to slide smoothly within the holder 33, the holder 33 is designed so that there is a gap left at up-and-down direction when both ACC 1 and DCC 2 is loaded within the holder 33. Because of this structure, it was especially difficult to maintain stable engagement between the grip slot 2a of the DCC 2 and the projection 35b, and results in error movement because of detachment of that engagement.

In view of the foregoing, it is a primary object of the invention to provide a tape recorder which can maintain a tape cassette within a transfer means stably as the tape cassette moves in the direction parallel to the direction of insertion.

Another object of the present invention is to provide a tape recorder, wherein the tape cassette moves in the direction perpendicular to the upper surface of the tape cassette smoothly after parallel movement of the tape cassette.

In accordance with the aforesaid object, a tape recorder in which a tape cassette has a hole at an upper surface of the tape cassette, and in which the tape cassette is moved in the direction parallel to the direction of insertion and then moved in the direction perpendicular to the upper surface of the tape cassette to set the tape cassette at playback position, comprises: (a) a holder for holding the tape cassette, (b) a first supporting means for supporting the holder so that the holder moves in the direction perpendicular to the upper surface of the tape cassette, (c) a projection disposed on the first supporting means, the projection mating with the hole in the upper surface of the tape cassette at a mating position, (d) means for transferring the tape cassette from the mating position in the direction parallel to the direction of insertion of the tape cassette, (e) a second supporting means, disposed adjacent to the lower surface of the tape cassette, for supporting the lower surface of the tape cassette, the second supporting means mounted on the transfer means so that when the tape cassette moves in the direction perpendicular to the upper surface of the tape cassette, the second supporting means does not obstruct the perpendicular movement of the tape cassette, (f) an urging means for urging the second supporting means so that the second supporting means keeps contact with the lower surface of the tape cassette.

In a preferred embodiment of the present invention, in a tape recorder as above-described the second supporting means is rotatably mounted on the transfer means.

According to a yet further preferred embodiment, in the tape recorder above-described, the second supporting means has an extending part on the same side as the direction of insertion of the tape cassette, and the first supporting means has a contact surface which contacts the extending part of the second supporting means when the parallel movement of the tape cassette is accomplished whereby the second supporting means does not contact with the lower surface of the tape cassette as the tape cassette moves perpendicularly.

With this arrangement, it is possible to provide a tape recorder, wherein when the tape cassette moves in the parallel direction, the tape cassette is maintained within the transfer means stably because the tape cassette is caught between the first supporting means and the second supporting means, while when the tape cassette moves perpendicularly, the tape cassette moves smoothly without obstruction by the second supporting means because the second supporting means runs away from the lower surface of the tape cassette after parallel movement is accomplished.

Above and other objects, features and advantages of the invention will became apparent from the following description of embodiments thereof with reference to the drawings.
FIG. 1 is a side view of a first embodiment of the invention;
FIG. 2 is a plan view of the first embodiment of the invention;
FIG. 3 (a), (b), (c) show operational conditions of the first embodiment of the invention;
FIG. 4 (a), (b), (c) show operational conditions of a second embodiment of the invention;
FIG. 5 is a plan view of a conventional tape recorder; and
FIG. 6 is a side view of the conventional tape recorder.

In the drawings, the same numerals indicate the same or corresponding parts.

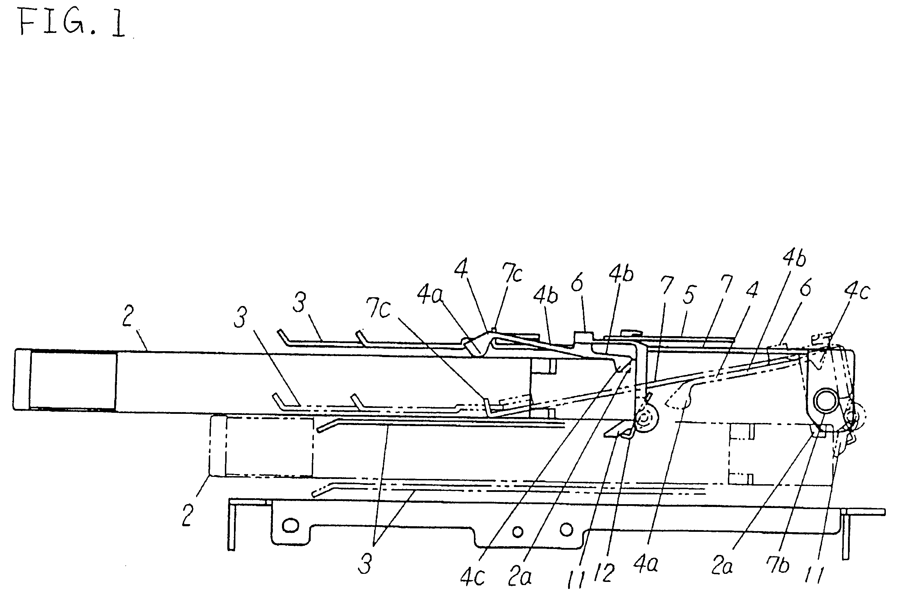

The present invention shall be described in detail with reference to a first embodiment as illustrated in Figs. 1 to 3. A numeral 2 represents a DCC. A numeral 3 represents a holder for holding the DCC 2. A numeral 4 represents an engaging member for engaging the DCC 2 with the engaging member 4. A numeral 5 represents an arm member. A numeral 6 represents a slider member formed integrally with the engaging member 4. The slider member 6 is connected with the arm member 5. A transfer means comprises the arm member 5, the engaging member 4, and slider member 6. The slider member 6 mates with a lengthy hole 7a of a first supporting member 7 so that the slider member 6 slides within the hole 7a. A numeral 8 represents a magnetic head which records on a tape or plays back a tape. A numeral 9 represents a driving motor which rotates a capstan (not shown in the drawings). The driving motor 9 drives the DCC 2 which is caught between the capstan and the pinch roller 10. The engaging member 4 comprises a first projection 4a, a second projection 4c, and an arm part 4b connecting between the first projection 4a and the second projection 4c. The arm part 4b has resilient properties. The second projection 4c mates with a grip slot 2a of the DCC 2. The first projection 4a mates with a hole 1a (for inserting a reel axis) of ACC 1 shown in FIG. 5. The first projection 4a and the second projection 4c usually project into the holder 3 and contact with the DCC 2 or ACC 1 inserted within the holder 3. A second supporting member 11 is mounted on the slider member 6 rotatably around an axis 11a and urged toward the lower surface of DCC 2 or ACC 1 by a spring 12 so that the second supporting member 11 supports the lower surface of the DCC 2 or ACC 1 inserted within the holder 3.

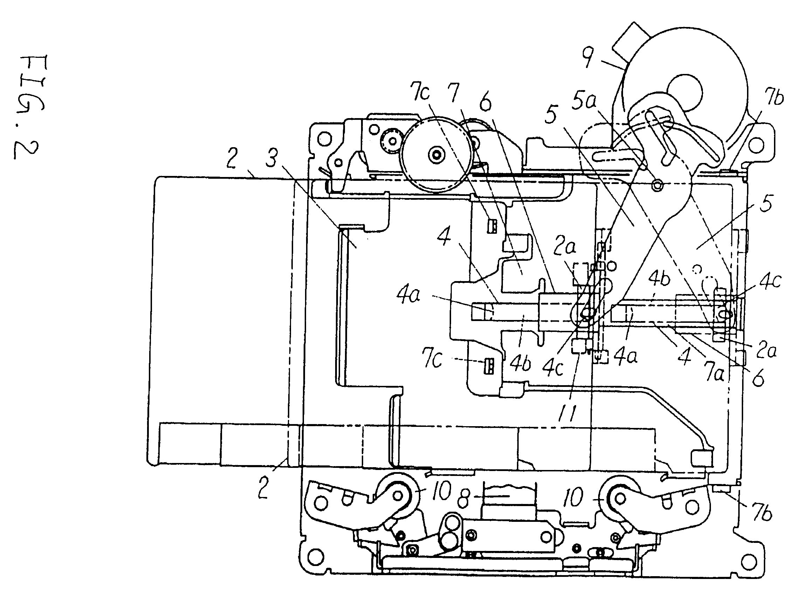

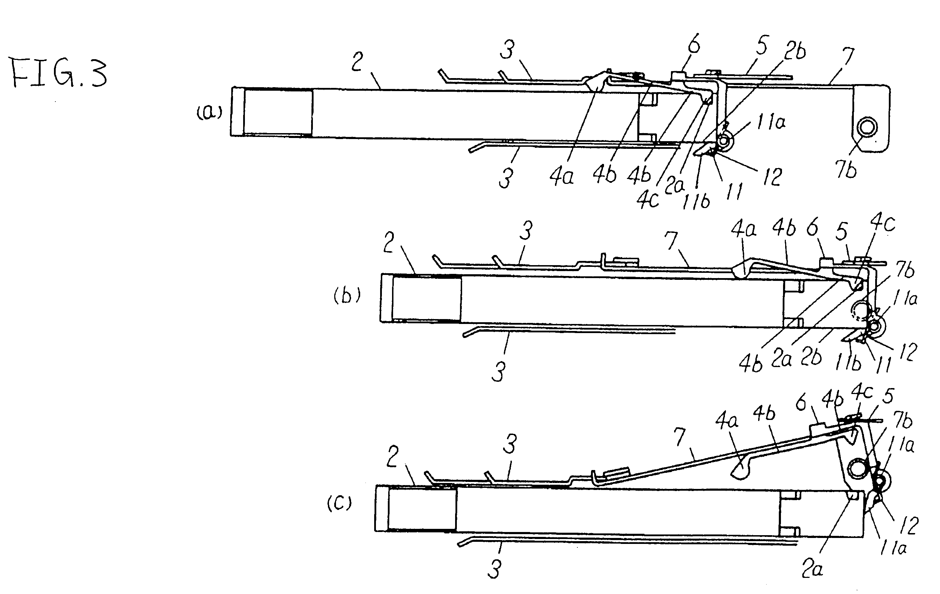

The following is an operational condition of this first embodiment. When the DCC 2 is inserted into the holder 3, the DCC hits the engaging member 4 at first. Then the arm part 4b of the engaging member 4 bends because of its resilient properties. After that, the DCC 2 will be maintained by the slider member 6 because of mating the grip slot 2a of the DCC 2 with the second projection 4c of the engaging member 4. At the same time, a lower surface 2b of the DCC 2 is supported from the bottom by the arm part 11b of the second supporting member 11 because the arm part 11b is urged toward the lower surface 2b of DCC 2 by the spring 12 as shown in Fig. 3(a). Then the DCC 2 is moved in the direction parallel to the direction of insertion of the DCC 2 by the movement of the slider member 6 since the arm member 5 which is connected to the slider member 6 rotates around an axis 5a counter-clock-wise as shown as imaginary line in Fig. 2. Fig. 3(b) shows the condition that the parallel movement of the DCC 2 is accomplished. Then the DCC 2 within the holder 3 is moved in the direction perpendicular to the upper surface of the DCC 2 (downward direction) since the first supporting member 7 rotates around the rotation axis part 7b, whereby the holder 3 is lowered by the downward force caused by the downward movement of the supporting part 7c of the first supporting member 7 as shown as imaginary line in Fig.1. In this perpendicular movement of the DCC 2, the arm part 11b of the second supporting member 11 does not obstruct the perpendicular (downward) movement of the DCC 2 since the arm part 11b rotates around the axis 11a counter-clock-wise against the urging force of the spring 12 by the force caused by the downward movement of the lower surface 2b of the DCC 2. Fig.3(c) shows the condition that the perpendicular movement of the DCC 2 is accomplished and this is a place where recording and playback is done.

According to this first embodiment, when the DCC 2 moves in the parallel direction, the DCC 2 is maintained within the holder 3 stably because the DCC 2 is caught between the first supporting member 7 and the second supporting member 11, while when the DCC 2 moves perpendicularly, the DCC 2 moves smoothly without obstruction by the second supporting member because the arm part 11b of the second supporting member 11 rotates around the axis 11a counter-clock-wise and runs away from the lower surface 2b of the DCC 2.

The above-described first embodiment is illustrated in the case of using a DCC 2. In the case of using ACC 1, the only difference is that hole 1a of ACC 1 mates with the first projection 4a of the engaging member 4 instead of the grip slot 2a of the DCC 2 mating with the second projection 4c in the case of using DCC 2, and the same effect above-described is obtained.

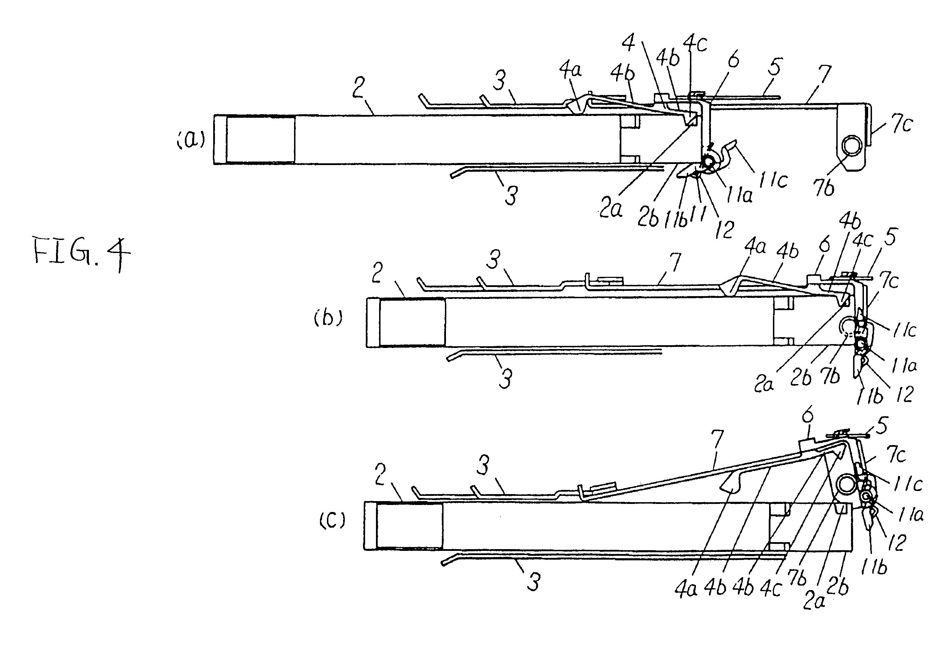

The following is a second embodiment of the present invention as illustrated in Fig.4. Fig.4 shows an operational condition in the case of using DCC 2. In this second embodiment, a different structure from the first embodiment is that the second supporting member 11 mounted on the slider member 6 has an extending part 11c at the opposite side of the arm part 11b in addition to the arm part 11b which supports the lower surface 2b of the DCC 2. When the DCC 2 is inserted into the holder 3, the DCC 2 hits the engaging member 4 at first. Then the arm part 4b of the engaging member 4 bends. After that, the DCC 2 is maintained by the slider member 6 because of the mating of the grip slot 2a of the DCC 2 with the second projection 4c of the engaging member 4. At the same time, a lower surface 2b of the DCC 2 is supported from the bottom by the arm part 11b of the second supporting member 11. Fig.3(a) shows the condition that the DCC 2 is caught between the first supporting member 7 and the second supporting member 11. Then the DCC 2 is moved in the direction parallel to the direction of insertion of the DCC 2 by the movement of the slider member 6 until the extending part 11c of the second supporting member 11 hits a contact surface 7c of the first supporting member 7. When the the slider member 6 moves in parallel direction still more, the second supporting member 11 rotates around the axis 11a counter-clock-wise against the urging force of the spring 12 because the extending part 11c is pushed by the contact surface 7c, whereby the arm part 11b of the second supporting member 11 goes down to the position where the arm part 11b does not obstruct the downward movement of the DCC 2. Fig.4(b) shows the condition that the parallel movement of the DCC 2 is accomplished. Then the DCC 2 within the holder 3 is moved in the perpendicular direction since the first supporting member 7 rotates around the rotation axis part 7b. In this perpendicular movement of the DCC 2, the arm part 11b of the second supporting member 11 does not obstruct the perpendicular movement of the DCC 2 at all because the arm part 11b already goes down to the position where the arm part 11b does not obstruct the downward movement of the DCC 2 when the DCC 2 starts moving downwardly.

According to this second embodiment, when the DCC 2 moves in the parallel direction, the DCC 2 is maintained within the holder 3 stably because the DCC 2 is caught between the first supporting member 7 and the second supporting member 11 as in the first embodiment. After that, when the DCC 2 moves perpendicularly, the DCC 2 moves more smoothly than in the first embodiment because in this perpendicular movement of the DCC 2, the arm part 11b does not contact with the lower surface 2b of the DCC 2 at all.

In the case of using the ACC 1, the only difference is that the hole 1a of the ACC 1 mates with the first projection 4a of the engaging member 4, and the same effect as above-described is obtained.

While the second supporting member 11 rotates counter-clock-wise in the second embodiment, a direction of rotation of the second supporting member 11 can be changed or structured as long as the same results that the arm part 11b runs away from the lower surface 2b of the DCC 2 in the perpendicular movement of the DCC 2.

While the invention has been described above in connection with an embodiment thereof, it should be understood that various changes, suggestions and modifications will readily occur to one skilled in the art without departing from the spirit and scope of the invention defined by the appended claims.

## Claims

1. A tape recorder in which a tape cassette having a magnetic tape is used and the tape cassette has a hole at upper surface of the tape cassette, and in which the tape cassette is moved to the direction parallel to the direction of insertion for a certain distance and then moved to the direction perpendicular to the upper surface of the tape cassette to set the tape cassette at playback position, comprising:
(a) a holder for holding the tape cassette;
(b) a first supporting means for supporting the holder so that the holder moves to the direction perpendicular to the upper surface of the tape cassette;
(c) a projection disposed on the first supporting means, the projection mating with the hole of the upper surface of the tape cassette at a mating position;
(d) means for transferring the tape cassette from the mating position to the direction parallel to the direction of insertion of the tape cassette;
(e) a second supporting means, disposed adjacent to the lower surface of the tape cassette, for supporting the lower surface of the tape cassette, the second supporting means mounted on the transfer means so that when the tape cassette moves to the direction perpendicular to the upper surface of the tape cassette, the second supporting means does not obstruct the perpendicular movement of the tape cassette, and
(f) an urging means for urging the second supporting means so that the second supporting means keeps contact with the lower surface of the tape cassette.

2. A tape recorder as recited in claim 1.
wherein the second supporting means is rotatably mounted on the transfer means.

3. A tape recorder as recited in claim 2, wherein the second supporting means having a extending part on the same side as the direction of insertion of the tape cassette, the first supporting means having a contact surface which contact with the extending part of the second supporting means when the parallel movement of the tape cassette is accomplished whereby the second supporting means does not contact with the lower surface of the tape cassette as the tape cassette moves perpendicularly.
